# DEMANDE DE BREVET EUROPEEN

(11) **EP 3 709 063 A1**
(43) Date de publication de la demande: **16.09.2020**
(21) Numéro de dépôt: 20159812.5
(22) Date de dépôt: 27.02.2020
(51) Int. Cl.: G02B 6/44

(54) **ELÉMENT DE BLOCAGE POUR UN COFFRET DE RACCORDEMENT OPTIQUE**

(30) Priorité: 12.03.2019 FR 1902503
(71) Demandeur: Omelcom, 01500 Chateau-Gaillard (FR)
(72) Inventeur: CLERC, Patrice, 01960 PERONNAS (FR); THOURET, Nicolas, 01700 MIRIBEL (FR); PIN, Jean-Patrick, 01330 VILLARS LES DOMBES (FR)
(74) Mandataire: Verriest, Philippe

(57) **Abrégé**

Elément de blocage (13) pour un coffret de raccordement optique (1), le coffret de raccordement optique (1) comprenant un fond (3) s'étendant selon un plan de base (5) et un ensemble de guidage et/ou de raccordement (7) pour câbles optiques et/ou fils optiques, l'ensemble de guidage et/ou de raccordement (7) étant rapporté sur et/ou ménagé dans le fond (3), l'élément de blocage (13) étant configuré pour, en une position montée, coopérer avec une partie mobile (11) de l'ensemble de guidage et/ou de raccordement (7) de sorte à maintenir la partie mobile (11) en une position escamotée, et/ou être disposé au moins en partie en regard d'une partie fixe (9) de l'ensemble de guidage et/ou de raccordement (7) transversalement au plan de base (5).

## Description

### Domaine de l'invention

La présente invention concerne un élément de blocage pour un coffret de raccordement optique et également le coffret de raccordement optique.

### Art antérieur

Pour le déploiement d'un réseau optique, il est connu d'utiliser des coffrets de raccordement optique visant à distribuer des fils optiques du réseau optique aux domiciles des clients.

Ainsi, un coffret de raccordement optique reçoit en entrée un câble optique du réseau qui est dégainé et dont les fils optiques sont répartis entre plusieurs câbles optiques de sortie.

Les fils optiques du câble optique du réseau sont raccordés par épissurage à des fils optiques correspondants des câbles optiques de sortie. Il est donc possible d'installer les câbles de sortie au préalable.

Certains câbles optiques de sortie sont directement raccordés aux domiciles de clients et d'autres câbles de sorties sont raccordés à d'autres coffrets de raccordement similaires.

On parle alors de dérivation, un coffret de raccordement optique pouvant ainsi être connecté à plusieurs autres coffrets de raccordement optique pour l'extension du réseau.

Le raccordement de chaque coffret optique au câble optique d'entrée du réseau est réalisé au préalable de sorte que le nombre des fils optiques du câble optique du réseau suffisent aux futurs raccordements clients.

Lors d'un raccordement client, la présence dans le coffret du câble optique du réseau et des câbles optiques de sorties déjà raccordés peut être une gêne dans la gestion des fils optiques. Le raccordement client peut ainsi s'avérer long et fastidieux.

Par ailleurs, il existe un risque de dégradation des câbles optiques et/ou fils optiques servant au raccordement réseau et à la dérivation.

La présente invention vise à résoudre tout ou partie des inconvénients mentionnés ci-dessus.

### Exposé de l'invention

A cet effet, la présente invention concerne un élément de blocage pour un coffret de raccordement optique, le coffret de raccordement optique comprenant un fond s'étendant selon un plan de base et un ensemble de guidage et/ou de raccordement pour câbles optiques et/ou fils optiques, l'ensemble de guidage et/ou de raccordement étant rapporté sur et/ou ménagé dans le fond, l'élément de blocage étant configuré pour, en une position montée coopérer avec une partie mobile de l'ensemble de guidage et/ou de raccordement de sorte à maintenir la partie mobile en une position escamotée ; et/ou être disposé au moins en partie en regard d'une partie fixe de l'ensemble de guidage et/ou de raccordement transversalement au plan de base.

En d'autres termes, l'ensemble de guidage et/ou de raccordement pour câble optique et/ou fils optiques est agencé pour la gestion des câbles optiques et/ou des fils optiques à l'intérieur du coffret de raccordement optique.

Dans le présent texte, le terme câble optique concerne un câble comprenant une pluralité de fils optiques, chaque fil optique comprenant au moins une fibre optique.

Ainsi, l'élément de blocage limite l'accès à certaines portions de l'ensemble de guidage et/ou de raccordement. En effet, le maintien de la partie mobile en position escamotée et/ou l'obstruction d'au moins une partie de la partie fixe limite l'accès aux câbles optiques et/ou fils optiques rangés dans le coffret de raccordement optique.

L'élément de blocage permet donc à un opérateur intervenant sur le coffret de raccordement optique de n'avoir accès qu'aux portions de câbles optiques et/ou fils optiques nécessaires à son intervention.

Les autres portions de câbles optiques et/ou de fils optiques non accessibles sont ainsi protégées.

Selon un aspect de l'invention, la coopération de l'élément de blocage avec la partie mobile correspond à une coopération par contact surfacique.

De préférence, la coopération correspond à la présence d'une portion de l'élément de blocage en regard d'au moins une portion correspondante de la partie mobile transversalement au plan de base.

Selon un aspect de l'invention, l'élément de blocage comprend un système de fixation configuré pour coopérer avec la partie fixe de sorte à permettre la disposition de l'élément de blocage en position montée et également en une position ouverte dans laquelle la partie mobile est apte à être disposée en une position déployée et/ou dans laquelle un espace au moins en partie en regard de la partie fixe est libre.

Le système de fixation permet non seulement de maintenir en position l'élément de blocage dans le coffret de raccordement optique mais aussi de disposer l'élément de blocage en position ouverte, la coopération entre l'élément de blocage et la partie fixe étant maintenue.

Cette disposition permet donc l'accès aux portions de l'ensemble de guidage et/ou de raccordement cachées par l'élément de blocage sans avoir à démonter l'élément de blocage.

Selon un aspect de l'invention, le système de fixation présente une liaison de type pivot avec l'ensemble de guidage et/ou de raccordement et en particulier avec la partie fixe.

De préférence, le système de liaison présente deux parties saillantes agencée pour coopérer avec deux trous de la partie fixe du coffret de raccordement optique de manière à engendrer une charnière.

En particulier, le système fixation est amovible. Cette disposition permet démonter facilement l'élément de blocage de la partie fixe du coffret de raccordement optique et également de le mettre en place aisément.

Selon un aspect de l'invention, le système de fixation comprend en outre un élément de maintien en position montée configuré pour coopérer avec un élément de maintien correspondant du coffret de raccordement optique.

Cette disposition permet de rester en position montée lorsqu'un opérateur travaille sur une partie de l'ensemble de guidage et/ou de raccordement non masquée par l'élément de blocage. Il n'y a pas de passage intempestif en position ouverte.

Selon un aspect de l'invention, l'élément de maintien est une partie d'un système d'encliquetage et l'élément de maintien complémentaire et une partie d'un système d'encliquetage complémentaire.

De préférence, l'élément de maintien comprend au moins une ouverture ménagée dans l'élément de blocage et l'élément de maintien complémentaire comprend au moins un crochet de retenue correspondant ou inversement.

Selon un aspect de l'invention, le système d'encliquetage est conformé pour être scellé. Cette disposition permet de s'assurer que la portion de fils optiques et/ou de câbles optiques masqués par l'élément de blocage ne sera pas libre d'accès à un futur opérateur.

Selon un aspect de l'invention, l'élément de blocage comprend une partie démontable, l'élément de blocage étant configuré pour, en position montée et lorsque la partie démontable est séparée du reste de l'élément de blocage autoriser le déplacement de la partie mobile entre la position escamotée et une position déployée, et/ou présenter une ouverture d'accès située au moins en partie en regard de la partie fixe de l'ensemble de guidage et/ou de raccordement transversalement au plan de base.

L'élément de blocage est ainsi adaptable à la configuration interne du coffret de raccordement optique en ce qui concerne la gestion des câbles optiques et/ou fils optiques.

Ainsi, si la partie mobile en position escamotée bloque l'accès à certaines portions de câbles optiques et/ou fils optiques, la partie démontable peut être séparée du reste de l'élément de blocage en cas de besoin.

Il en est de même lorsqu'il devient nécessaire d'accéder à une portion de la partie fixe auparavant masquée.

La partie démontable permet d'adapter le même élément de blocage à plusieurs configurations de guidage et/ou de raccordement de câbles optiques et/ou fils optiques.

Selon un aspect de l'invention, la partie démontable est une partie sécable.

Selon un aspect de l'invention, la partie démontable est définie par au moins une portion de contour de plus faible solidité de l'élément de blocage. Cette disposition permet une découpe manuelle ou par un outil comme une pince.

Selon un aspect de l'invention, la partie démontable peut être au moins en partie transparente ou translucide. Ainsi, il est possible de de voir l'organisation des câbles optiques et/ou fils optiques non accessibles.

Selon un aspect de l'invention, la partie démontable comprend une portion longitudinale raccordée par ses extrémités au reste de l'élément de blocage. De préférence, la portion longitudinale est agencée pour coopérer avec la partie mobile en position escamotée.

Cette disposition permet un blocage efficace de la partie mobile tout en économisant de la matière.

Selon un aspect de l'invention, la partie démontable comprend une plaque de masquage. De préférence, la plaque de masquage est disposée au moins en partie en regard de la partie fixe.

De préférence, la partie démontable comprend la portion longitudinale et/ou la plaque de masquage. Cette disposition améliore l'adaptabilité de l'élément de blocage.

Selon un aspect de l'invention, la partie démontable ou au moins une portion de la partie démontable est amovible. Cette disposition permet de retirer aisément la partie démontable ou l'au moins une portion de la partie démontable.

De préférence, par amovible il est entendu que la partie démontable ou l'au moins une portion de la partie démontable est apte à coopérer à nouveau avec le reste de l'élément de blocage.

Cette disposition permet de retirer la partie démontable ou l'au moins une portion sans que cela ne soit irréversible.

Selon un aspect de l'invention, l'élément de blocage est configuré pour, en position montée, coopérer avec au moins une partie mobile parmi plusieurs parties mobiles de l'ensemble de guidage et/ou de raccordement de sorte à maintenir l'au moins une partie mobile en une position escamotée.

Cette disposition permet de rendre accessible seulement une ou plusieurs des parties mobiles accessibles après montage de l'élément de blocage.

Selon un aspect de l'invention, l'élément de blocage comprend plusieurs portions longitudinales s'étendant sensiblement parallèlement. De préférence, chaque partie longitudinale est démontable indépendamment des autres parties longitudinales.

Selon un aspect de l'invention, l'élément de blocage comprend une partie centrale et deux parties latérales s'étendant transversalement à la partie centrale, la partie centrale et/ou au moins une des parties latérales présentant un emplacement de protection pour câbles optiques et/ou fils optiques disposé en regard sur la partie fixe en position montée.

L'élément de blocage présente ainsi une partie libre entre ces deux parties latérales définissant une portion de l'ensemble de guidage et/ou de rangement accessible en position montée.

L'élément de blocage constitue également en coopération avec le reste du coffret de raccordement optique au moins une goulotte de protection pour câbles optiques et/ou fils optiques.

La présente invention concerne également un coffret de raccordement optique comprenant un élément de blocage tel que décrit ci-avant, dans lequel la partie fixe comprend une zone de lovage de distribution pour fils optiques et/ou la ou chaque partie mobile comprend une cassette correspondante présentant une zone d'épissurage de fils optiques.

Selon un aspect de l'invention, le coffret de raccordement optique est un point de branchement optique ou PBO. De préférence, le coffret de raccordement optique est un coffret pour la réalisation d'épissures et pour une installation en façade ou sur poteau en extérieur.

Selon un autre aspect de l'invention, le coffret de raccordement optique est un boitier de transition optique intérieur ou BTI configuré pour être installé en intérieur.

Selon un aspect de l'invention, l'élément de blocage est configuré pour, en position montée, coopérer avec la partie mobile de sorte à maintenir la partie mobile en une position escamotée, la partie mobile étant au moins en partie en regard de la zone de lovage de distribution transversalement au plan de base.

Cette disposition permet de masquer au moins partiellement la zone de lovage de distribution dans le but d'empêcher l'opérateur d'avoir accès aux fils optiques disposés dans la zone de lovage de distribution.

Selon un aspect de l'invention, l'élément de blocage est configuré pour, en position montée, être disposé au moins en partie en regard de la zone de lovage de distribution transversalement au plan de base.

Ainsi, alternativement ou en plus de la partie mobile, l'élément de blocage empêche l'opérateur d'avoir accès aux fils optiques disposés dans la zone de lovage de distribution.

Selon un aspect de l'invention, la casette ou au moins une des cassettes est disposée au moins en partie en regard de la zone de lovage de distribution en position escamotée.

Ainsi lorsque la cassette (ou au moins une des cassettes, lorsqu'il y a plusieurs cassettes) est maintenue en position escamotée par l'élément de blocage, la zone de lovage de distribution n'est pas accessible. Le maintien de la cassette permet donc à la fois de limiter l'accès à la zone de lovage de distribution et également à la cassette en elle-même.

Selon un aspect de l'invention, le coffret de raccordement optique comprend plusieurs parties mobiles agencées pour être chacune disposée en position escamotée et en une position déployée, l'élément de blocage étant agencé pour maintenir en position escamotée au moins une des parties mobiles.

Cette disposition permet de définir des parties mobiles accessibles et des parties mobiles bloquées par l'élément de blocage. Ceci est particulièrement utile pour le raccordement client car l'opérateur intervenant sur le coffret de raccordement optique n'a pas accès aux câbles optiques et/ou fils optiques destinés à la distribution.

Par distribution il est entendu distribution de fibres optiques pour la constitution d'un réseau reliant au moins deux coffrets de raccordement optiques.

Selon un aspect de l'invention, la partie fixe est configurée pour coopérer avec la ou chaque partie mobile de manière à permettre un maintien en position déployée et/ou un maintien en position escamotée.

Cette disposition permet à un opérateur intervenant sur le coffret de raccordement optique de ne pas avoir à tenir la ou chaque partie mobile pour qu'elle reste en position déployée et/ou en position escamotée.

Selon un aspect de l'invention, la partie fixe et/ou la partie mobile présente une accroche de maintien en position déployée et/ou une accroche de maintien en position escamotée.

De préférence, l'accroche de maintien en position déployée et/ou une accroche de maintien en position escamotée comprend une butée, une encoche et/ou un système d'encliquetage.

Selon un aspect de l'invention, la ou chaque partie mobile est agencée pour coopérer avec la partie fixe selon une liaison pivot entre la position escamotée et la position déployée, la liaison pivot étant amovible et agencée de sorte à permettre une réversibilité de la partie mobile correspondante par rotation autour d'un axe central de la partie mobile transversal à un axe de la liaison pivot.

Cette disposition permet d'orienter la ou chaque cassette selon un sens voulue. Ceci permet donc de masquer la face choisie en regard de la ou chaque cassette en position escamotée lorsque ladite face est orientée vers le fond du coffret de raccordement optique.

Selon un aspect de l'invention, le coffret de raccordement comprend une charnière amovible configurée pour permettre la liaison pivot. De préférence, la charnière comprend deux avancées s'étendant selon l'axe de la liaison pivot agencées pour coopérer avec deux emplacements d'accueil complémentaires.

En particulier, les avancées sont rapportées sur la cassette et les emplacements d'accueil ménagés dans la partie fixe ou inversement.

Selon un aspect de l'invention, lorsque le coffret de raccordement optique comprend plusieurs parties mobiles, les axes des liaisons pivots sont décalés transversalement au plan de base de sorte à ce que les cassettes s'étendent sensiblement parallèlement en position escamotée.

De préférence, les axes des liaisons pivots sont alignés parallèlement au plan de base et sont parallèles entre eux.

Selon un aspect de l'invention, la partie fixe comprend au moins un ergot s'étendant transversalement au plan de base et agencé pour coopérer avec la cassette la plus éloignée de la zone de lovage de distribution de manière à maintenir la cassette en position déployée en limitant un risque de décrochage à cause du caractère amovible de la cassette.

Cette disposition permet de maintenir en position plus fortement la cassette d'extrémité en position déployée et éventuellement d'autres cassettes en position déployée s'appuyant sur la cassette d'extrémité.

Selon un aspect de l'invention, la ou chaque cassette comprend une première face présentant des nervures et/ou rainures de guidage et une deuxième face opposée lisse. Par lisse, il est entendu ne présentant pas d'élément saillant, des éléments creux pouvant être présents.

Les nervures et/ou rainures de guidage constituent la zone d'épissurage de la cassette correspondante.

Ainsi, lors de l'utilisation de plusieurs cassettes, il est possible de disposer chaque cassette dans le sens le plus pratique pour l'opérateur.

Selon un aspect de l'invention, la ou les cassettes agencées pour être maintenues en position par l'élément de blocage présentent leurs premières faces orientées vers le fond en position escamotée.

Cette disposition permet à l'opérateur de raccorder les câbles optiques et fils optiques de distribution, c'est-à-dire de raccordement au réseau, lorsque le coffret est à plat.

Selon un aspect de l'invention, la ou les cassettes agencées pour être librement disposées en position déployée en présence l'élément de blocage présentent leurs deuxièmes faces orientées vers le fond en position escamotée.

Cette disposition permet une réalisation plus simple des épissures pour le raccordement client lorsque le coffret de raccordement optique est fixé sur un support à la verticale. Ainsi en position déployée, la première face est sensiblement horizontale et accessible par le dessus.

Selon un aspect de l'invention, la ou chaque cassette comprend un capot de fermeture configuré pour coopérer avec la première face de manière à recouvrir les nervures et/ou rainures de guidage.

Cette disposition permet de protéger et maintenir en position les fils optiques raccordés par épissures.

Selon un aspect de l'invention, le coffret de raccordement optique comprend deux canaux latéraux d'entrée / sortie pour câble optique et/ou fils optiques ménagés dans la partie fixe autour de la zone de lovage de distribution et de la ou les parties mobiles relativement au plan de base et reliant chacun une ouverture externe correspondante du coffret de raccordement optique à la zone de lovage de distribution.

Cette géométrie est avantageuse pour le raccordement au réseau car ces canaux d'entrée / sortie permettent une insertion aisée d'un câble optique du réseau et la sortie de ce même câble, la partie du câble interne au coffret étant dégainée.

Selon un aspect de l'invention, les canaux latéraux d'entrée / sortie sont chacun en regard d'un emplacement de protection correspondant pour câbles optiques et/ou fils optiques de l'élément de blocage en position montée.

Selon un aspect de l'invention, la partie fixe comprend une zone de lovage de raccordement client disposée entre les canaux latéraux d'entrée / sortie relativement au plan de base.

Cette disposition est avantageuse puisque le coffret de raccordement optique présente deux zones de lovage ayant chacune une fonction différente : la distribution ou raccordement au réseau qui est masquée par l'élément de blocage et la zone de lovage de raccordement client toujours accessible, la dérivation vers d'autres coffret de raccordement optique étant dans la partie distribution.

Selon un aspect de l'invention, une zone de coopération entre la et les parties mobiles et la partie fixe est située entre la zone de lovage de distribution et la zone de lovage de raccordement client.

Par zone de lovage il est entendue zone présentant des guides pour fils optiques permettant leur enroulement en ovale et/ou en huit et/ou en U pour opérer un changement de direction de fil optique.

Selon un aspect de l'invention, le coffret de raccordement optique présente un paroi latérale d'entrée /sortie s'étendant transversalement au plan de base et dans laquelle sont ménagées les ouvertures externes et des ouvertures de raccordement et/ou de dérivation.

Cette disposition permet de ménager l'ensemble des ouvertures sur une seule et même paroi qui peut être la paroi inférieure lorsque le coffret est fixé verticalement à un support.

Selon un aspect de l'invention, au moins une ouverture de raccordement et/ou de dérivation présente une forme oblongue apte à faire passer deux câbles optiques.

Cette disposition permet de limiter le nombre d'ouvertures de raccordement et/ou de dérivation. Par raccordement il est entendu raccordement client et par dérivation raccordement à un autre coffret de raccordement optique.

Selon un aspect de l'invention, la partie fixe présente des canaux latéraux de raccordement client permettant le passage de câble optiques et/ou fils optiques entre la zone de lovage de distribution, la zone de lovage de raccordement client et la zone de coopération.

Chaque canal latéral de raccordement client est ménagé au moins en partie le long du canal latéral d'entrée / sortie correspondant et est situé entre le canal latéral d'entrée / sortie correspondant et l'ensemble constitué de la zone de lovage de coopération, la zone de lovage de distribution client et de la zone de coopération.

Selon un aspect de l'invention, le coffret de raccordement optique présente une zone de guidage et d'isolation agencée pour isoler de l'extérieur et guider les câbles optiques respectivement vers les canaux d'entrée / sorties et la zone de lovage de raccordement client.

De préférence, le coffret de raccordement optique comprend une zone latérale d'isolation s'étendant en regard la paroi latérale et comprenant au moins un bloc d'isolation tel qu'un bloc de mousse adapté pour isoler de l'humidité et dans lequel sont ménagés des ouvertures de passage de câbles optiques.

Cette disposition permet d'isoler simplement le coffret de raccordement optique, une seule zone étant dédiée à cet effet. De préférence, la zone latérale d'isolation comprend au moins deux blocs d'isolation adaptés pour prendre en tenaille des câbles optiques.

Selon un aspect de l'invention, le coffret de raccordement optique comprend également un joint disposé dans une rainure du coffret de raccordement optique et présentant une forme de U inversé de sorte à délimiter un contour fermé avec la zone latérale d'isolation. Les fils optiques sont ainsi compris à l'intérieur du contour fermé.

Selon un aspect de l'invention, le coffret de raccordement optique comprend une partie avant de fermeture apte à coopérer avec le reste du coffret de raccordement pour le fermer.

Selon un aspect de l'invention, le coffret de raccordement optique présente un plan de symétrie longitudinal qui est transversal au plan de base.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig. 1] est une vue en perspective d'un élément de blocage monté dans un coffret de raccordement optique ouvert avec deux cassettes.
[Fig. 2] est une vue en perspective de l'élément de blocage et du coffret de raccordement optique ouvert sans cassettes.
[Fig. 3] est une vue en perspective de l'élément de blocage et de cinq cassettes.
[Fig. 4] est une vue en perspective d'un ensemble de guidage et/ou de raccordement du coffret de raccordement optique.
[Fig. 5] est une vue en perspective de l'avant de l'élément de blocage.
[Fig. 6] est une vue en perspective de l'arrière de l'élément de blocage.
[Fig. 7] est une vue en perspective d'une première face d'une cassette.
[Fig. 8] est une vue en perspective d'une deuxième face de la cassette.
[Fig. 9] est une vue en perspective de l'avant d'une variante de réalisation de l'élément de blocage.
[Fig. 10] est une vue en perspective du coffret de raccordement fermé.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

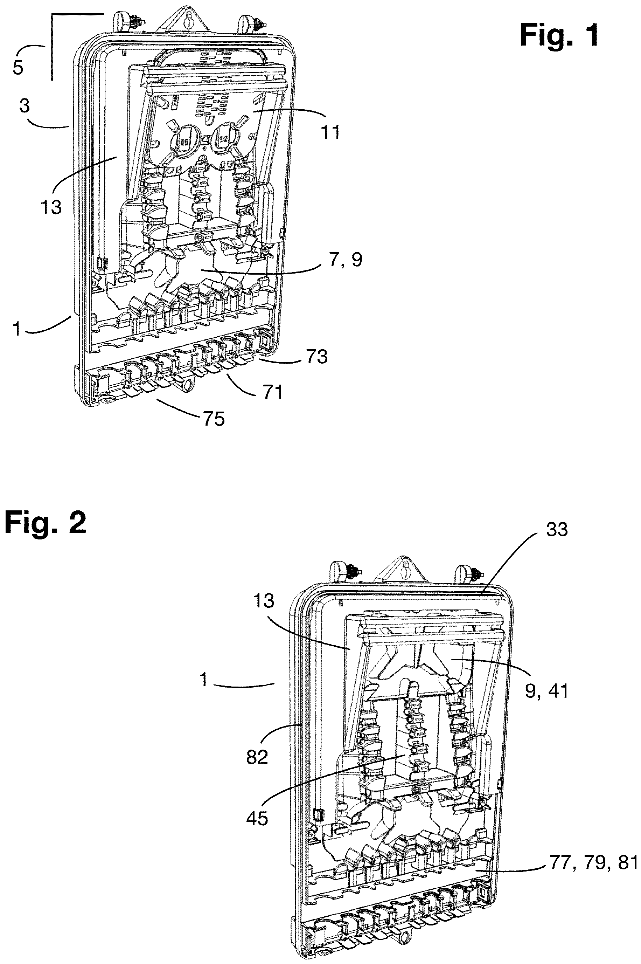

Comme illustré aux figures 1 et 2, un coffret de raccordement optique 1 comprend un fond 3 s'étendant selon un plan de base 5. Il s'agit d'un point de branchement optique ou PBO.

Le coffret de raccordement optique 1 comprend un ensemble de guidage et/ou de raccordement 7 rapporté sur et/ou ménagé dans le fond 3.

L'ensemble de guidage et/ou de raccordement 7 comprend une partie fixe 9 et plusieurs parties mobiles 11.

Comme illustré aux figures 1 à 3, 5, 6 et 9, le coffret de raccordement optique 1 comprend un élément de blocage 13. Aux figures 1 et 2, l'élément de blocage 13 est en position montée sur l'ensemble de guidage et/ou de raccordement 7.

En position montée, l'élément de blocage 13 est configuré pour coopérer par contact surfacique avec une ou plusieurs parties mobiles 11 de manière à maintenir la ou les parties mobiles 11 en une position escamotée.

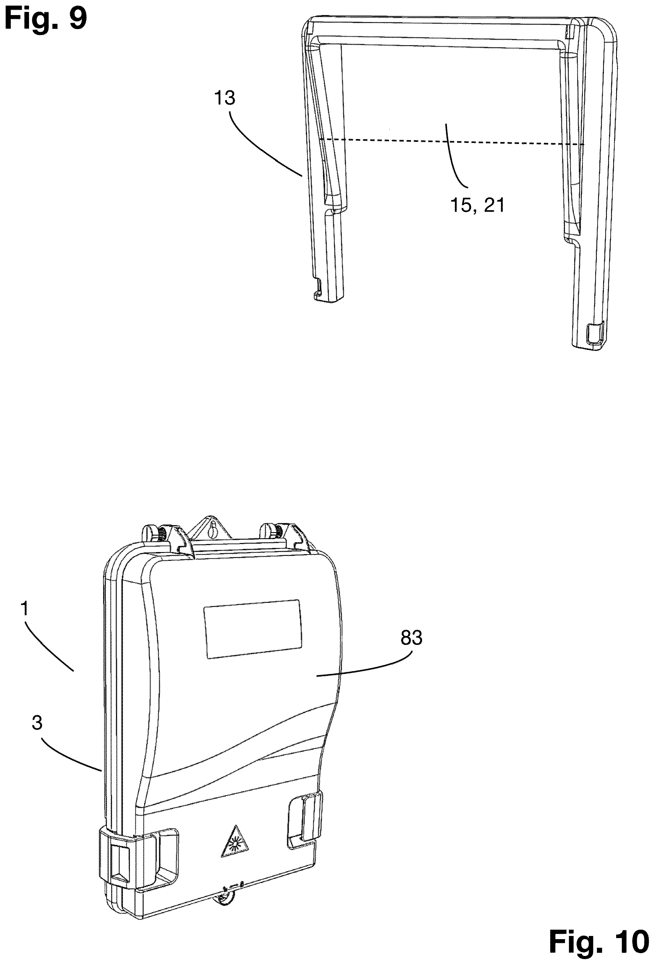

Alternativement ou en outre, l'élément de blocage 13 est configuré pour être disposé au moins en partie en regard de la partie fixe 9 transversalement au plan de base 5, la variante de la figure 9 pouvant convenir à ce cas de figure.

L'élément de blocage 13 comprend une ou plusieurs parties démontables 15. Ici l'élément de blocage 13 comprend plusieurs parties démontables 15.

Chaque partie démontable 15 peut être amovible et/ou comprendre au moins une portion amovible. Toute partie amovible est apte à coopérer à nouveau avec le reste de l'élément de blocage 13.

Alternativement, chaque partie démontable 15 peut être retirée définitivement de l'élément de blocage 13. Pour ce faire le caractère démontable est obtenu par la présence d'au moins une portion de contour de plus faible solidité ménagée dans l'élément de blocage 13. La partie démontable 15 peut ainsi être sécable.

Chaque partie démontable 15 peut comprendre au moins une partie transparente ou translucide.

Une fois retirée, chaque partie démontable 15 autorise le déplacement d'au moins une partie mobile 11, le retrait engendrant une ouverture d'accès 17.

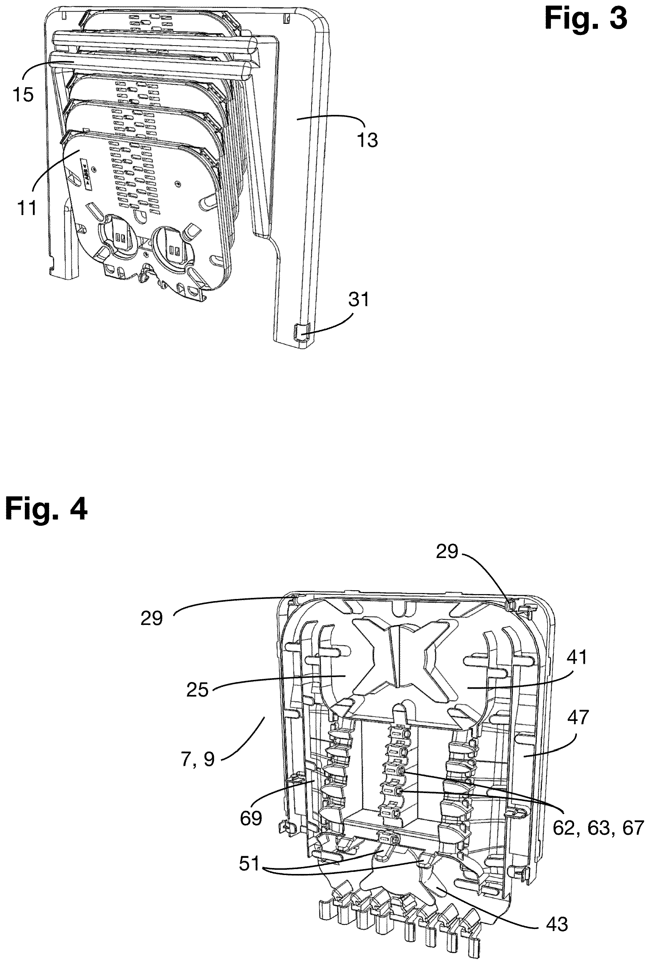

Comme plus particulièrement visible à la figure 3, chaque partie démontable 15 comprend une portion longitudinale 19 raccordée par ses extrémités au reste de l'élément de blocage 13.

Ainsi, plusieurs portions longitudinales 19 s'étendent parallèlement et sont démontables indépendamment pour adapter le nombre de parties mobiles 11 non maintenues en position escamotée.

Alternativement ou en outre, une partie démontable 15 peut être une plaque de masquage 21 comme illustrée à la figure 9.

L'élément de blocage 13 comprend également un système de fixation 23 configuré pour coopérer avec l'ensemble de guidage et/ou de raccordement 7 selon une liaison pivot. Cette liaison pivot est également amovible, ce qui permet de démonter l'élément de blocage 13 du reste du coffret de raccordement optique 1.

La liaison pivot permet de déplacer l'élément de blocage 13 de la position montée comme aux figures 1 et 2 en une position ouverte dans laquelle l'élément de blocage 13 s'étend transversalement au fond 3 et permet le passage des parties mobiles 11 auparavant maintenues en position escamotée de passer en position déployée. Un espace 25 qui est libre et situé en regard de la partie fixe 9 est ainsi engendré.

Le système de fixation 23 comprend deux parties saillantes 27 configurées pour coopérer avec deux trous 29 ménagés dans l'ensemble de guidage et/ou de raccordement 7 de manière à engendrer une charnière.

Le système de fixation 23 comprend également un élément de maintien en position montée 31 et un élément de maintien en position ouverte 33, chacun comprenant une partie d'un système d'encliquetage apte à coopérer avec une partie complémentaire ménagés dans ou rapportée sur l'ensemble de guidage et/ou de raccordement 7. Il peut s'agir d'une ouverture coopérant avec un crochet.

Ainsi, cette coopération mécanique maintien la position ouverte et la position montée sans qu'il soit nécessaire à un opérateur de tenir l'élément de blocage 13. L'élément de maintien en position montée 31 est également agencé pour être scellé en position montée si besoin.

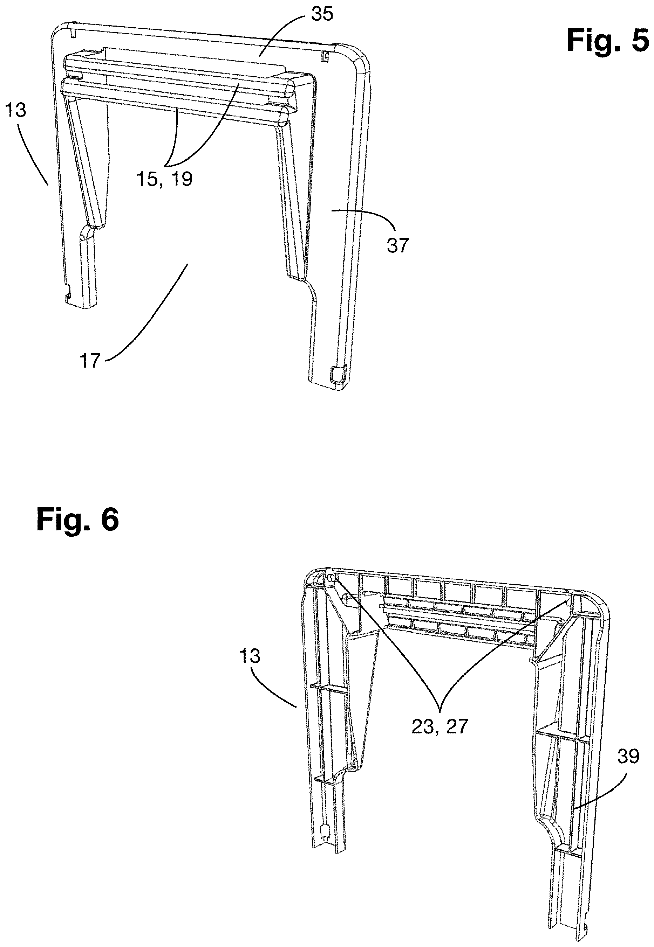

Comme illustré aux figures 5 et 6, l'élément de blocage 13 comprend une partie centrale 35 et deux parties latérales 37 s'étendant transversalement à la partie centrale 35.

Ainsi, l'élément de blocage 13 ménage l'espace 25 entre les deux parties latérales 37 rendant accessible une portion de l'ensemble de guidage et/ou de raccordement 7.

Chaque partie latérale 37 comprend un emplacement de protection 39 en regard de la partie fixe 9 de manière à constituer une goulotte de protection de câbles optiques et/ou fils optiques disposés sur la partie fixe 9.

Comme illustré à la figure 4, la partie fixe 9 comprend une zone de lovage de distribution 41, une zone de lovage de raccordement client 43, une zone de coopération 45 avec les parties mobiles 11 et deux canaux latéraux d'entrée / sortie 47.

Par zone de lovage de distribution 41 et zone de lovage de raccordement client 43, il est entendu zone présentant des guides pour fils optiques permettant leur enroulement en ovale et/ou en huit et/ou en U pour opérer un changement de direction de fil optique.

Ainsi, l'élément de blocage 3 coopère en position montée avec la partie mobile 11 de sorte à maintenir la partie mobile 11 en une position escamotée. La partie mobile 11 est au moins en partie en regard de la zone de lovage de distribution 41 transversalement au plan de base 5 pour masquer au moins partiellement la zone de lovage de distribution 41. Le but est d'empêcher l'opérateur d'avoir accès aux fils optiques disposés dans la zone de lovage de distribution 41.

En l'absence de partie mobile 11 ou en outre, l'élément de blocage 13 est disposé en position montée au moins en partie en regard de la zone de lovage de distribution 41 transversalement au plan de base 5. L'élément de blocage 13 empêche, également dans ce cas de figure, l'opérateur d'avoir accès aux fils optiques disposés dans la zone de lovage de distribution 41.

La distribution correspond au raccordement du coffret de raccordement optique 1 au réseau. Un câble optique du réseau est ainsi destiné à être disposé dans les canaux latéraux d'entrée / sortie 47, la partie interne dudit câble étant dégainée de manière à pouvoir lover ses fils optiques dans la zone de lovage de distribution.

Certains fils optiques du câble optique du réseau sont coupés dans le but d'être connectés par épissurage au niveau des parties mobiles 11.

Des câbles optiques à destination de domiciles de clients comprennent des fils optiques qui sont lovés dans la zone de lovage de raccordement client 43. Ces fils optiques peuvent ainsi être connectés au fils optiques du réseau au niveau des parties mobiles 11.

La zone de coopération 45 de la partie fixe est configurée pour coopérer avec chaque partie mobile 11. Pour ce faire, la partie fixe 9 et/ou chaque partie mobile 11 comprend une accroche de maintien 49 en position de manière à ce que chaque partie mobile 11 disposée en position escamotée ou déployée reste dans cette position sans qu'il soit nécessaire pour un opérateur de tenir la partie mobile 11.

Cette accroche de maintien 49 peut être une butée, une encoche et/ou un système d'encliquetage permettant un maintien en position de la partie mobile 11 par contact.

La zone de coopération 45 présente en outre trois ergots 51 s'étendant transversalement au plan de base 5. Ces ergots 51 sont configurés pour coopérer avec la partie mobile 11 la plus éloignée de la zone de lovage de distribution 41 lorsque ladite partie mobile 11 est en position déployée.

Ces ergots 51 sont destinés à limiter le risque de décrochage de la ou des parties mobiles 11 en position déployée lorsqu'un opérateur travaille dessus. Ces ergots 51 permettent également de définir la position déployée en servant de butée.

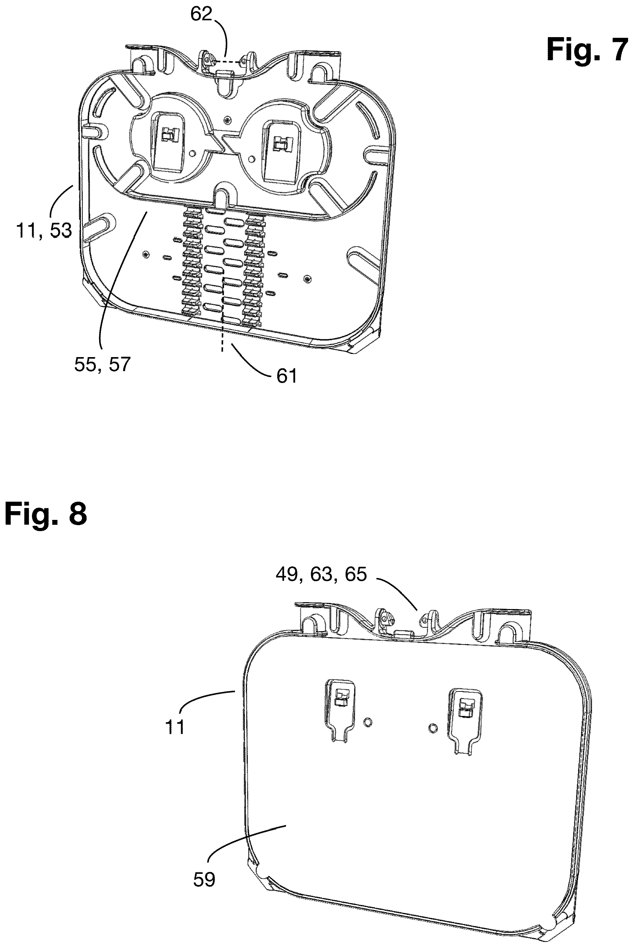

Comme illustré aux figures 7 et 8, chaque partie mobile 11 comprend une cassette 53 présentant une première face 55 pourvue de nervures et/ou rainures de guidage 57 et d'une deuxième face 59 opposée qui est lisse, c'est-à-dire sans élément saillant mais pouvant présenté des éléments creux.

Les nervures et/ou rainures de guidage 57 constituent une zone d'épissurage de fils optiques. Ainsi, les fils optiques provenant du réseau sont connectés au fils optiques destinés au raccordement client ou à d'autres coffret de raccordement optique 1.

Dans ce cas, le raccordement à d'autres coffrets de raccordement optique 1 est appelé dérivation car un seul coffret de raccordement optique 1 peut être relié à plusieurs coffrets de raccordement optique 1 : un par le câble optique réseau et les autres par dérivation.

La cassette 53 peut comprendre un capot de fermeture configuré pour coopérer avec la première face 55 de manière à recouvrir les nervures et/ou rainures de guidage 57. Les fils optiques disposés au niveau des nervures et/ou rainures de guidage 57 et les épissures de ces fils optiques sont protégés.

La cassette 53 coopère avec la partie fixe 9 selon une liaison pivot qui est amovible. La cassette 53 est également réversible par révolution autour d'un axe central 61 de la cassette 53 transversal à un axe de ladite liaison pivot 62.

Il est alors possible de disposer la première face 55 de la cassette 53 destinée à être maintenue en position par l'élément de blocage 13 en regard de la zone de lovage de distribution 41 pour que les fils optiques et les épissures ne soient pas accessibles. Dans ce cas, il n'est pas nécessaire d'utiliser de capot de fermeture.

La liaison pivot est générée par une charnière amovible 63 comprenant deux avancées 65 de la cassette 53 s'étendant en regard l'une de l'autre selon l'axe de la liaison pivot 62 et deux emplacements d'accueil 67 correspondants de la partie fixe 9.

Comme illustré à la figure 4, les axes des liaisons pivots 62 des cassettes sont décalés transversalement au plan de base 5 de manière à ce que les cassettes 53 soient sensiblement parallèles en position escamotée comme visible à la figure 3.

Les canaux latéraux d'entrée / sortie 47 sont disposés autour de la zone de lovage de distribution 41, de la zone de lovage de raccordement client 43 et la zone de coopération 45 relativement au plan de base 5.

La partie fixe 9 présente également des canaux latéraux de raccordement client 69 permettant le passage de câble optiques et/ou fils optiques entre la zone de lovage de distribution 41, la zone de lovage de raccordement client 43 et la zone de coopération 45.

Chaque canal latéral de raccordement client 69 est ménagé au moins en partie le long du canal latéral d'entrée / sortie 47 correspondant et est situé entre le canal latéral d'entrée / sortie 47 correspondant et l'ensemble constitué de la zone de lovage de distribution 41, la zone de lovage de raccordement client 43 et de la zone de coopération 45.

Les canaux latéraux d'entrée / sortie 47 et la zone de lovage de distribution 41 sont utilisés pour les câbles optiques et/ou fils optiques du réseau et pour la dérivation tandis que canaux latéraux de raccordement client 69 et la zone de lovage de raccordement client 43 sont destinés aux raccordements clients.

Comme illustré aux figures 1 et 2, le coffret de raccordement optique 1 comprend une paroi latérale d'entrée / sortie 71 transversale au plan de base 5 et comprenant des ouvertures externes 73 permettant aux canaux latéraux d'entrée / sortie 47 de déboucher vers l'extérieur du coffret de raccordement optique 1.

La paroi latérale d'entrée / sortie 71 présente aussi des ouvertures de raccordement et de dérivation 75 pour l'entrée de câbles optiques comprenant des fils optiques destinés à être connectés par épissurage.

Des ouvertures de raccordement et de dérivation 75 peuvent présenter une section oblongue de manière à permettre le passage de deux câbles optiques.

Le coffret de raccordement optique 1 présente une zone de guidage et d'isolation 77 agencée pour isoler de l'extérieur et guider les câbles optiques respectivement vers les canaux latéraux d'entrée / sortie 47 et la zone de lovage de raccordement client 43.

Le coffret de raccordement optique 1 comprend une zone latérale d'isolation 79 s'étendant en regard la paroi latérale d'entrée / sortie 71 et comprenant au moins un bloc d'isolation tel qu'un bloc de mousse 81 adapté pour isoler de l'humidité et dans lequel sont ménagés des ouvertures de passage de câbles optiques.

La zone latérale d'isolation 79 comprend au moins deux blocs de mousse 81 adaptés pour prendre en tenaille des câbles optiques.

Le coffret de raccordement optique 1 comprend également un joint 82 disposé dans une rainure du coffret de raccordement optique 1 et présentant une forme de U inversé de sorte à délimiter un contour fermé avec la zone latérale d'isolation 79. Les fils optiques sont ainsi compris à l'intérieur du contour fermé.

Comme illustré à la figure 10, le coffret de raccordement optique 1 comprend une partie avant de fermeture 83 apte à coopérer avec le reste du coffret de raccordement optique 1 pour le fermer.

L'utilisation de l'élément de blocage 13 permet ainsi de limiter l'accès aux seuls fils optiques destinés à être reliés aux domiciles de clients. Le câble optique réseau ainsi que la zone de lovage de distribution 41 sont ainsi masquées.

Il est également possible de bloquer l'accès à certaines cassettes 53, par exemples celles ayant préalablement servi à la réalisation d'épissures pour la dérivation vers d'autres coffrets de raccordement optique 1.

Dans ce cas, il est effectivement préférable que l'opérateur venant ultérieurement raccorder un client au réseau n'ait pas accès à la zone des lovage de distribution et aux cassettes 53 maintenues en position escamotée.

Comme il va de soi, l'invention ne se limite pas à la seule forme d'exécution décrite ci-dessus à titre d'exemple, elle en embrasse au contraire toutes les variantes de réalisation.

## Revendications

1. Elément de blocage (13) pour un coffret de raccordement optique (1), le coffret de raccordement optique (1) comprenant un fond (3) s'étendant selon un plan de base (5) et un ensemble de guidage et/ou de raccordement (7) pour câbles optiques et/ou fils optiques, l'ensemble de guidage et/ou de raccordement (7) étant rapporté sur et/ou ménagé dans le fond (3), l'élément de blocage (13) étant configuré pour, en une position montée :
- coopérer avec une partie mobile (11) de l'ensemble de guidage et/ou de raccordement (7) de sorte à maintenir la partie mobile (11) en une position escamotée, et/ou
- être disposé au moins en partie en regard d'une partie fixe (9) de l'ensemble de guidage et/ou de raccordement (7) transversalement au plan de base (5).

2. Elément de blocage (13) selon la revendication 1, comprenant un système de fixation (23) configuré pour coopérer avec la partie fixe (9) de sorte à permettre la disposition de l'élément de blocage (13) en position montée et également en une position ouverte dans laquelle la partie mobile (11) est apte à être disposée en une position déployée et/ou dans laquelle un espace (25) au moins en partie en regard de la partie fixe (9) est libre.

3. Elément de blocage (13) selon l'une des revendications 1 ou 2, comprenant une partie démontable (15), l'élément de blocage (13) étant configuré pour, en position montée et lorsque la partie démontable (15) est séparée du reste de l'élément de blocage (13) :
- autoriser le déplacement de la partie mobile (11) entre la position escamotée et une position déployée, et/ou
- présenter une ouverture d'accès (17) située au moins en partie en regard de la partie fixe (9) de l'ensemble de guidage et/ou de raccordement (7) transversalement au plan de base (5).

4. Elément de blocage (13) selon l'une des revendications 1 à 3, configuré pour, en position montée, coopérer avec au moins une partie mobile (11) parmi plusieurs parties mobiles (11) de l'ensemble de guidage et/ou de raccordement (7) de sorte à maintenir l'au moins une partie mobile (11) en une position escamotée.

5. Elément de blocage (13) selon l'une des revendications 1 à 4, comprenant une partie centrale (35) et deux parties latérales (37) s'étendant transversalement à la partie centrale (35), la partie centrale (35) et/ou au moins une des parties latérales (37) présentant un emplacement de protection (39) pour câbles optiques et/ou fils optiques disposé en regard sur la partie fixe (9) en position montée.

6. Coffret de raccordement optique (1) comprenant un élément de blocage (13) selon l'une des revendications 1 à 5, dans lequel la partie fixe (9) comprend une zone de lovage de distribution (41) pour fils optiques et/ou la ou chaque partie mobile (11) comprend une cassette (53) correspondante présentant une zone d'épissurage de fils optiques.

7. Coffret de raccordement optique (1) selon la revendication 6, dans lequel la casette (53) ou au moins une des cassettes (53) est disposée au moins en partie en regard de la zone de lovage de distribution (41) en position escamotée.

8. Coffret de raccordement optique (1) selon l'une des revendications 6 ou 7, comprenant plusieurs parties mobiles (11) agencées pour être chacune disposée en position escamotée et en une position déployée, l'élément de blocage (13) étant agencé pour maintenir en position escamotée au moins une des parties mobiles (11).

9. Coffret de raccordement optique (1) selon l'une des revendications 6 à 8, dans lequel la partie fixe (9) est configurée pour coopérer avec la ou chaque partie mobile (11) de manière à permettre un maintien en position déployée et/ou un maintien en position escamotée.

10. Coffret de raccordement optique (1) selon l'une des revendications 6 à 9, dans lequel la ou chaque partie mobile (11) est agencée pour coopérer avec la partie fixe (9) selon une liaison pivot entre la position escamotée et la position déployée, la liaison pivot étant amovible et agencée de sorte à permettre une réversibilité de la partie mobile (11) correspondante par rotation autour d'un axe central (61) de la partie mobile (11) transversal à un axe de la liaison pivot (62).

11. Coffret de raccordement optique (1) selon l'une des revendications 6 à 10, comprenant deux canaux latéraux d'entrée / sortie (47) pour câble optique et/ou fils optiques ménagés dans la partie fixe (9) autour de la zone de lovage de distribution (41) et de la ou les parties mobiles (11) relativement au plan de base (5) et reliant chacun une ouverture externe (73) correspondante du coffret de raccordement optique (1) à la zone de lovage de distribution (41).

12. Coffret de raccordement optique (1) selon la revendication 11, dans lequel la partie fixe (9) comprend une zone de lovage de raccordement client (43) disposée entre les canaux latéraux d'entrée / sortie (47) relativement au plan de base (5).

13. Coffret de raccordement optique (1) selon l'une des revendications 11 ou 12, présentant un paroi latérale d'entrée /sortie (71) s'étendant transversalement au plan de base (5) et dans laquelle sont ménagées les ouvertures externes (73) et des ouvertures de raccordement et/ou de dérivation (75).
